# EUROPEAN PATENT SPECIFICATION

(11) **EP 3 261 273 B1**
(45) Date of publication and mention of the grant of the patent: **06.03.2019**
(21) Application number: 17170744.1
(22) Date of filing: 12.05.2017
(51) Int. Cl.: H04H 60/04

(54) **UNIVERSAL REMOTE MONITOR MIXER SYSTEM**
UNIVERSELLES FERNGESTEUERTES MONITORMISCHERSYSTEM
SYSTÈME MÉLANGEUR DE SURVEILLANCE À DISTANCE UNIVERSEL

(30) Priority: 21.06.2016 US 201615187992
(43) Date of publication of application: 27.12.2017
(73) Proprietor: Harman International Industries, Incorporated, Stamford, CT 06901 (US)
(72) Inventor: CHAVEZ, Paul Michael, Chatsworth, CA California 91329 (US); HOLLADAY, Adam James Edward, Salt Lake City, UT Utah 84106 (US)
(74) Representative: Westphal, Mussgnug & Partner Patentanwälte mbB

(56) References cited:
- US-A1- 2005 239 396
- LAZZARO J WAWRZYNEK UC BERKELEY J: "RTP Payload Format for MIDI; rfc6295.txt", RTP PAYLOAD FORMAT FOR MIDI; RFC6295.TXT, INTERNET ENGINEERING TASK FORCE, IETF; STANDARD, INTERNET SOCIETY (ISOC) 4, RUE DES FALAISES CH- 1205 GENEVA, SWITZERLAND, 7 June 2011 (2011-06-07), pages 1-171, XP015076034, [retrieved on 2011-06-07]

## Description

### TECHNICAL FIELD

Embodiments disclosed herein generally relate to a universal remote monitor mixer system.

### BACKGROUND

Audio mixing consoles are often used for combining, routing and altering the dynamics of audio signals. Such consoles may be controlled by various mobile devices such as phones and table by application driven interfaces. Often times these applications also perform various audio processing techniques in response to the commands at the mobile device.

Document US 2005/0239396 A1 discloses a system for communication among audio-related devices in an audio system which includes a performance equipment manager that communicates with audio-related devices to monitor and control changeable parameters of a corresponding audio-related device. Each of the audio-related devices includes an audio node structure having components that are representative of the functionality of the respective audio-related device. Some of the components are representative of changeable parameters in the audio-related device. The performance equipment manager is configured to be selectively subscribed to one or more of the changeable parameters so that when a predefined condition occurs, the audio-related device is configured to automatically provide the current value of the changeable parameter(s) to the performance equipment manager.

### SUMMARY

An apparatus for acting as an intermediary between a user mobile device and an audio mixing console may include a controller configured to act as an intermediary between the user mobile device and the audio mixing console, and to receive a signal from the audio mixing console distinct and separate from the controller, determine a model of the audio mixing console, and identify at least one attribute specific to the model of the audio mixing console. The controller is further configured to receive a variable control signal indicative of an audio command from the user mobile device distinct and separate from the controller; and transmit a mixer message to the audio mixing console based on the variable control signal received from the user mobile device and the at least one attribute specific to the model of the audio mixing console to provide the audio mixing console with a model specific mixer message.

A system may include a mobile device configured to transmit at least one system variable control signal indicative of an audio processing command, and a translation controller distinct and separate from the mobile device. The translation controller may be configured to receive the system variable control signal, and transmit a mixer message in a protocol specific to an audio mixing console based on the system variable control signal, the mixer message including at least one audio processing command.

A method may include receiving a signal from an audio mixing console and determining a model of the audio mixing console. The method further includes identifying attributes specific to the audio mixing console model, receiving a variable control signal indicative of an audio command from a mobile device separate and distinct from the audio mixer console; and then transmitting a mixer message to the audio mixing console based on the variable control signal and the model of the audio mixing console.

### BRIEF DESCRIPTION OF THE DRAWINGS

The embodiments of the present disclosure are pointed out with particularity in the appended claims. However, other features of the various embodiments will become more apparent and will be best understood by referring to the following detailed description in conjunction with the accompany drawings in which:
Figure 1 illustrates an example system diagram for an audio mixing system including a translation controller, according to one embodiment;
Figure 2 illustrates another example a system diagram for an audio mixing system;
Figure 3 illustrates an example flow chart for the audio mixing system; and
Figure 4 illustrates example look-up tables for the audio mixing system.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Generally disclosed herein is a universal remote monitor mixer system including a translation controller configured to interface with a digital mixing console to facilitate auxiliary control of the mixing console. The translation controller permits a selection of one or more consoles and facilitates bi-directional communication with the console via Musical Instrument Digital Interface (MIDI), or similar, commands. The translation controller may include a database of console specifications so that the translation controller may transmit commands to any number of consoles. The translation controller may transmit the required send level of each appropriate mixer channel to the auxiliary output with a proprietary protocol.

A traditional mechanism for monitor mixing is to require a front-of-house or monitor engineer to configure mixing for each artist from a remote location, typically employing the auxiliary sends on a console. This mechanism can create communication issues, and often result in a poor monitor mix for the artist. Typically, for personal monitor systems, the standard implementation is to pass audio from a console or on-ramp device to several connected small-format mixers, one per monitor mix. This can frequently add considerable expense for a customer, for example, a system for four band members would be expensive. In addition, an element of re-education is involved, since the signal path configuration is different from the long-established auxiliary output approach.

Mobile devices may be used to configure auxiliary sends of a console. This approach on stage is less robust, more prone to configuration and setup difficulty and less optimizable for the function.

Accordingly, the disclosed apparatus and method provides for a simple, cheaper control solution that is universal and programmable easily by the operator to integrate into any digital console, specifically those with Musical Instrument Digital Interface (MIDI) specifications. Furthermore, monitor setup remains consistent, as well as audio routing, eliminating the re-education required in other systems.

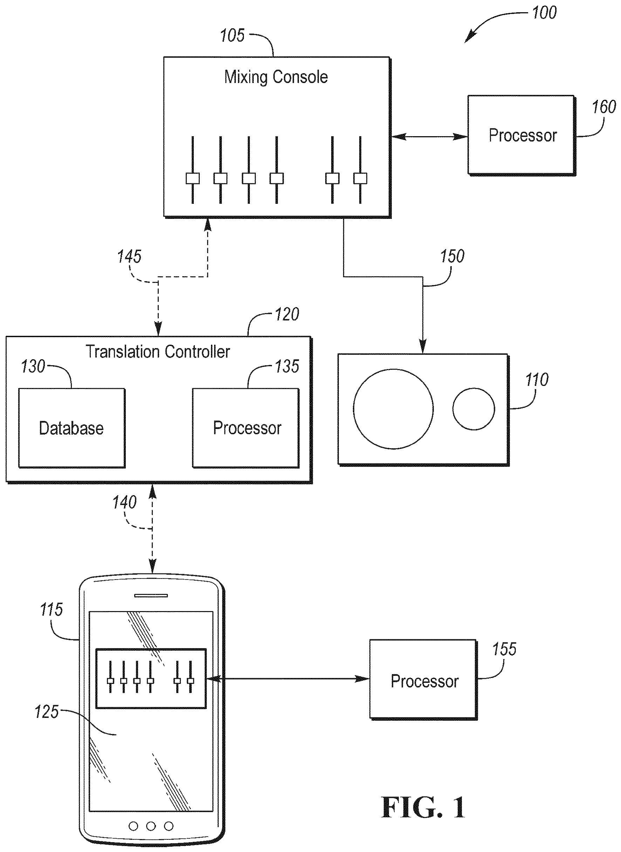

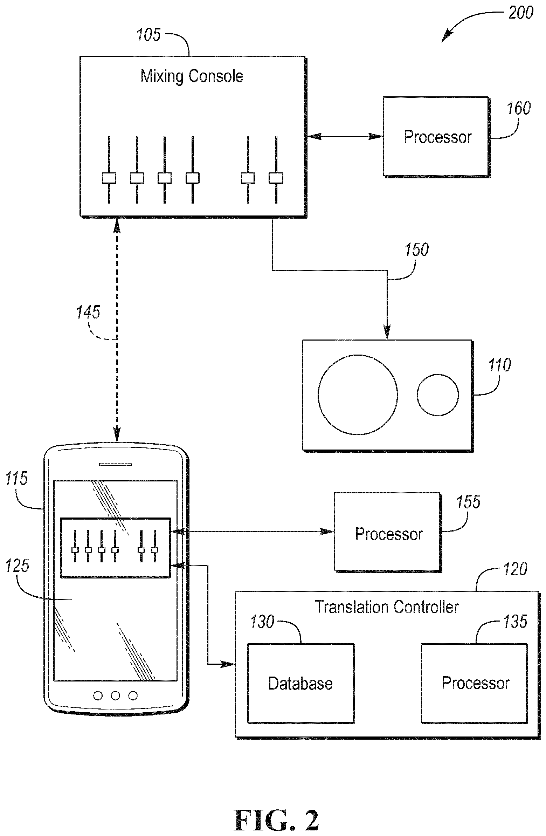

Figure 1 illustrates an example remote monitor mixer system 100 including a mixing console 105, at least one speaker 110, a mobile device 115 and a translation controller 120. Figure 2 illustrates an example remote monitor mixer system 200 including a mixing console 105, at least one speaker 110, and a mobile device 115 having a translation controller 120.

The mixing console 105 may be an audio mixer, sound board or mixer contained within a personal computer (PC) as part of a stand-alone mix application or a digital audio workstation mixer. The mixing console 105 may be configured to combine or mix various incoming audio signals and to alter the parameters of the incoming audio signals for an audio recording system. The mixing console 105 may also route, change a level, and adjust a tone for the incoming audio signals. The mixing console 105 may include a plurality of input ports configured to receive signals from various instrument devices, as well as output ports configured to output audio signals or audio commands via a wired or wireless communication path 150 to output devices such as the speaker 110.

The mixing console 105 may include a wireless transceiver (not shown) for receiving and/or transmitting wirelessly transmitted signals. The mixing console 105 may include a processor 160 and a controller memory (not shown) configured to analyze incoming signals.

The speaker 110 may audibly generate the mixed audio signal provided by the mixing console 105. A user may adjust the audio signal using the mobile device 115 based on the sound emitted from the speaker 110. Although not shown, additional devices such as amplifiers may be in communication with the speaker 110.

The mobile device 115 (also referred to herein as user control device) may be a mobile device such as a cellular phone, tablet, personal digital assistant, e-reader, laptop computer, smart watch, etc. The mobile device 115 may also be a personal monitor controller, or any other device configured to allow users to customize audio mixes. The mobile device 115 may include a processor 155 and database (not shown). The processor 155 is generally configured to execute a number of the functions associated with the mobile device 115 as disclosed herein. The mobile device 115 may be configured to transmit signals wirelessly to the translation controller 120 and/or the mixing console 105.

The processor 155 of the mobile device 115 may be configured to execute an application that provides a user interface via an interface or display 125 on the mobile device 115 to facilitate control of the mixing console 105. In one example, the mobile device 115 may be with a musician, or the user, and function as a front-of-house controller. The mobile device 115 may transmit system variable control signals to the translation controller 120. Such control signals may indicate a change in specific channel volumes, as well as selecting solo and mute controls. For example, the mobile device 115 may include a graphical user interface (GUI) 125 that simulates controls present on the mixing console 105 such as sliders, knobs, push buttons, etc. for the user to select. The mobile device 115 may then transmit the variable content signal to the translation controller 120 in response to the user selecting the controls via the GUI 125. In turn, the translation controller 120 may provide the variable content signal to the mixing console 105 to change a volume setting for a specific channel on the mixing console 105 as well as to mute the volume setting for a specific channel or to simply select one channel or a solo channel and to mute all other channels.

The translation controller 120 may be a stand-alone device including both hardware and software components capable of receiving commands from the mobile device 115 and transmitting a message to the mixing console 105. The translation controller 120 may also be integrated as part of the mobile device 115, as shown in Figure 2. The translation controller 120 may include a processor 135 and a database 130. The database 130 may be configured to maintain various protocols and look-up tables associated therewith. The database 130 may also maintain mixing console attributes, specifications and characteristics. The mixing console attributes may dictate a certain protocol recognized by a certain mixing console 105. Furthermore, the mixing console attributes may include commands specific to the mixing console so that commands from the mobile device 115 may be translated into console messages understood by the mixing console 105.

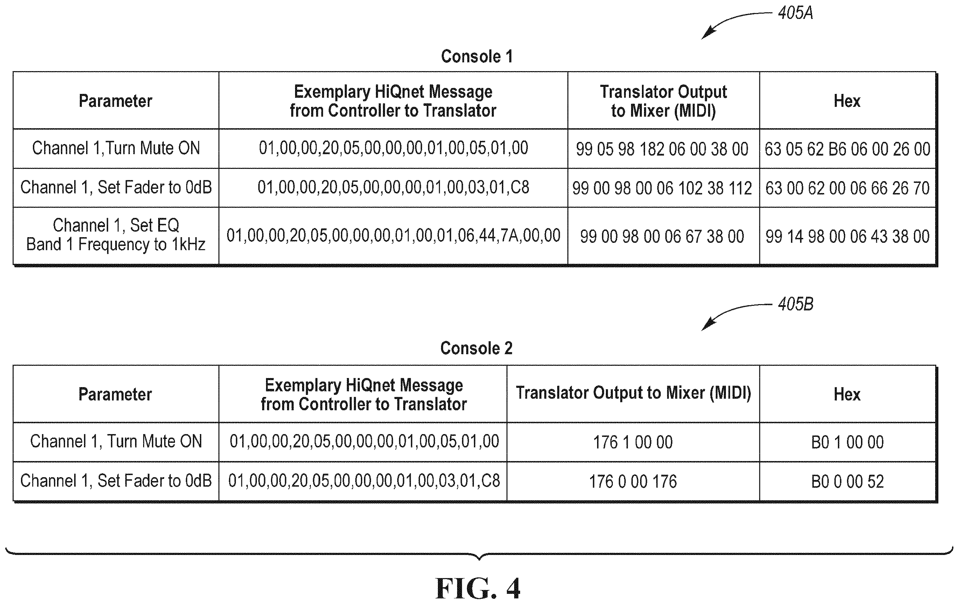

The translation controller 120 may rely on various libraries within the database 130 that may maintain details on the possible control parameters for each third party mixing console model. The libraries may include look-up tables (see Figure 4 for examples) specific to the mixing console model. Other matrices and tables for each parameter may also be maintained in the libraries via the database 130. Such tables and libraries may ensure that when a variable control signal is received from the mobile device 115, the translation controller 120 may appropriately translate the signal for the specific mixing console model.

The translation controller 120 may communicate with the mobile device 115 and the mixing console 105 using Musical Instrument Digital Interface (MIDI) protocol. MIDI is capable of carrying information regarding specific notation, pitch and velocity. MIDI may also carry control signals for sound parameters such as volume, mute, audio panning, cues, and clock signals. In using MIDI, the translation controller 120 may easily communicate with other instruments and devices. Most digital audio workstations (DAWs) are designed to understand MIDI.

The translation controller 120 may be in communication with the mobile device 115 via a first communication path 140 (shown in Figure 1). The translation controller 120 may be in communication with the mixing console 105 via a second communication path 145 (shown in Figure 1 and Figure 2). The communication paths 140, 145 may be wired or wireless communication paths configured to transmit commands, data, messages, etc., between the devices of the system either bidirectionally or uni-directionally. The communications paths 140, 145 may be facilitated by wireless networks, such as Wi-Fi®, Bluetooth®, ZigBee, cellular networks, ad-hoc wireless networks, etc. Other wired communication networks may also be used such as local area networks (LANs) including Ethernet, fiber optics, etc. The translation controller 120 may include various ports and connections to receive wired communication paths, as well as wireless transceivers configured to facilitate wired communication paths.

In the example above where the translation controller 120 communicates with the mixing console 105 and the mobile device 115 using MIDI, a MIDI connector and cable may be used to physically connect the devices at the first communication path 140 and the second communication path 145. The first and second communication paths 140, 145 may also include wireless transmissions of MIDI signals over Wi-Fi and BLUETOOTH. Open Sound Control (OSC) or High Definition MIDI (MIDI HD), or another communications protocol may also be implemented.

In practice, a user at the mobile device 115 may adjust instrument sounds using a fader, mute button, etc. As explained, this adjustment may be made via the display 125 on a mobile device, monitor or screen. The translation controller 120 may receive the adjustment in the form of a system variable signal. The system variable signal may include MIDI signals. The translation controller 120 may in turn identify the mixing console 105 and map the received system variable signal with the specific mixing console attributes, as outlined in the database 130.

The translation controller 120 may then transmit a mixer message to the mixing console 105 based on the received system variable signal. The mixing console 105 may perform various audio processing in response to receiving the variable signal such as adjusting a volume of a specific output. The mixing console 105 may then transmit the audio signal to the speaker 110 for playback.

The translation controller 120 may periodically receive software and database updates which may include additional/new console models and associated attributes. By having dedicated hardware element responsible for the translation between the mobile device 115 and the mixing console 105, set-up configuration and optimization may be decreased for the user. The translation controller 120 also supplies a universal control-only solution to processing audio that can be easily integrated by the user.

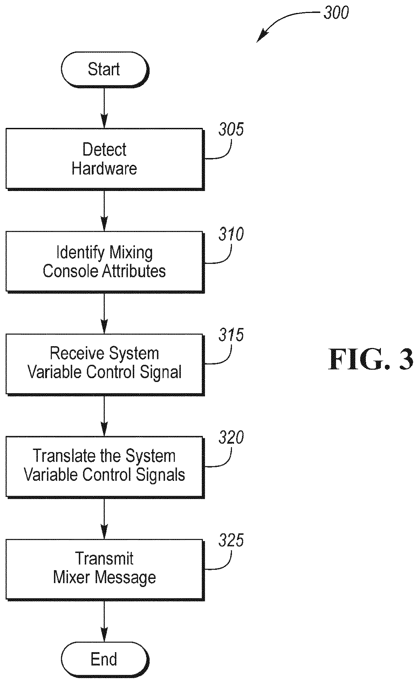

Figure 3 illustrates an example process 300 for the universal remote monitor mixer system 100. The process 300 begins at block 305 where the translation controller 120 may detect various hardware components via wired or wireless connections therewith. In one example, the translation controller 120 may receive a message from the mixing console 105 identifying the mixing console via a mixing console identification (console ID) and/or a mixing console model. In another example, the translation controller 120 may continuously transmit request signals and once a mixing console 105 is within a wireless range of the translation controller 120, the mixing console 105 may transmit a response signal indicating the console ID. The console ID may include various console attributes, including the mixing console make, model, and various operating characteristics such as which instruments are electrically coupled to the mixing console 105, etc. The instruments may comprise a guitar, drum, microphone, keyboard, etc.

Additionally or alternatively, the console model may be manually entered at the mobile device 115. That is, the user may manually select from a list of console models, or manually input the console model. The display 125 may facilitate such manual inputs and various selectable models. Manual entry of the console model may be available in the event that the translation controller 120 does not automatically detect the mixing console 105.

At block 310, the translation controller 120 may identify various mixer commands/attributes within the database 130. Commands or attributes may include the number of input or output channels, the amount of signal processing available, or parameter ranges for levels adjustments. The mixer commands may be specific to the console model. That is, each console model may be configured to transmit and receive messages across a specific profile, such as MIDI. Further, each console model may also be configured to understand certain pre-set mixer messages instructing the mixing console 105 to perform various audio processing effects. The database 130 may maintain the attributes. The mixer commands/attributes may be mapped using the console ID and/or the mixing console model. Additionally or alternatively, the mixer commands may be retained on another database distinct from the database 130. For example, the commands may be maintained at the mobile device 115

At block 315, the translation controller 120 may receive a system variable control signal from the mobile device 115. The variable control signal may include instructions as received at the mobile device 115 for audio processing at various audio channels. As explained, these commands may be received at the display 125 of the mobile device 115 via an application.

At block 320, the translation controller 120 may translate the received variable control signal and at block 325, transmit the same to the mixing console 105. The translation controller 120, in translating the variable control signal, may look-up corresponding commands/attributes based on the identified mixing console model or console ID and convert the control signal to MIDI format, for example, before transmitting the mixer message to the mixing console 105. In addition or alternative to MIDI, other protocols may also be implemented.

The process 300 may then end.

Figure 4 illustrates example look-up tables for the audio mixing system 100. The database 130 may maintain one or more look-up tables, each associated with a certain mixing console 105. Figure 4 illustrates an example first look-up table 405A and a second look-up table 405B (collectively referred to herein as look-up tables 405). The first look-up table 405A may include parameters for a first console, for example, a Yamaha CL Series Mixer. The second look-up table 405B may include parameters for a second console, for example, a Behringer XR Series Mixer. The look-up tables 405 may include a sound parameters for specific channels such as MUTE, and Fader settings. The look-up tables 405 may also include a HiQnet message associated with the parameter, as well as a MIDI command that may be used as the mixing message to convey the audio processing effect associated with the parameter. That is, using the look-up table, the controller 120 may translate the variable control signal received from the mobile device 115 to a protocol recognized by the mixing console 105 (e.g., provide a model specific mixer message).

Accordingly, a stand-alone translation controller may be implemented in the universal mixing system in order to allow multiple console models to be implemented with a mobile device. The translation controller may maintain model specific attributes, and provide for a seamless set-up and use of the mixing console within the mixing system.

Computing devices, such as the processor, mixer, mobile device, external server, etc., generally include computer-executable instructions, where the instructions may be executable by one or more computing devices such as those listed above. Computer-executable instructions may be compiled or interpreted from computer programs created using a variety of programming languages and/or technologies, including, without limitation, and either alone or in combination, Java™, C, C++, Visual Basic, Java Script, Perl, etc. In general, a processor (*e*.*g*., a microprocessor) receives instructions, *e*.*g*., from a memory, a computer-readable medium, etc., and executes these instructions, thereby performing one or more processes, including one or more of the processes described herein. Such instructions and other data may be stored and transmitted using a variety of computer-readable media.

While exemplary embodiments are described above, it is not intended that these embodiments describe all possible forms of the invention. Rather, the words used in the specification are words of description rather than limitation, and it is understood that various changes may be made without departing from the scope of the invention. Additionally, the features of various implementing embodiments may be combined to form further embodiments of the invention.

## Claims

1. A apparatus (120) for acting as an intermediary between a user mobile device (115) and an audio mixing console (105), comprising:
a controller configured to act as an intermediary between the user mobile device (115) and the audio mixing console (105) and to:
receive a signal from the audio mixing console (105) distinct and separate from the controller;
determine a model of the audio mixing console (105);
identify at least one attribute specific to the model of the audio mixing console (105);
receive a variable control signal indicative of an audio command from the user mobile device (115) distinct and separate from the controller; and
transmit a mixer message to the audio mixing console (105) based on the variable control signal received from the user mobile device (115) and the at least one attribute specific to the model of the audio mixing console (105) to provide the audio mixing console (105) with a model specific mixer message.

2. The apparatus (120) of claim 1, wherein the controller is configured to map the variable control signal to the attribute specific to the model of the audio mixing console (105) and formulate the model specific mixer message based on a translation of the variable control signal to the attribute.

3. The apparatus (120) of claim 1, wherein the controller is configured to detect the audio mixing console (105) in response to receiving a response signal from the audio mixing console (105), wherein the response signal includes a console identification.

4. The apparatus (120) of claim 3, wherein the controller is configured to identify the model of the audio mixing console (105) based on the console identification.

5. The apparatus (120) of claim 1, further comprising a wireless transceiver configured to communicate with the user mobile device (115) and the audio mixing console (105) via a wireless network.

6. The apparatus (120) of claim 1, wherein the model specific mixer message includes at least one audio processing command using Musical Instrument Digital Interface (MIDI).

7. A method comprising:
receiving a signal from an audio mixing console (105);
determining a model of the audio mixing console (105);
identifying attributes specific to the model of the audio mixing console (105);
receiving a variable control signal indicative of an audio command from a mobile device (115) separate and distinct from the audio mixer console (105); and
transmitting a mixer message to the audio mixing console (105) based on the variable control signal and the model of the audio mixing console (105).

8. The method of claim 7, further comprising mapping the variable control signal to the attributes specific to the model of the audio mixing console (105) and formulating the mixer message based on a translation of the variable control signal to the attributes.

9. The method of claim 7, wherein detecting the audio mixing console (105) includes receiving a response signal from the audio mixing console (105), wherein the response signal includes a console identification.

10. The method of claim 9, further comprising identifying the model of the audio mixing console (105) based on the console identification.

11. The method of claim 7, wherein the mixer message includes at least one audio processing command using Musical Instrument Digital Interface (MIDI).

## Patentansprüche

1. Vorrichtung (120) zum Agieren als Vermittlungsstelle zwischen einer mobilen Benutzervorrichtung (115) und einer Audiomischkonsole (105), umfassend:
eine Steuerung, die dazu konfiguriert ist, als Vermittlungsstelle zwischen der mobilen Benutzervorrichtung (115) und der Audiomischkonsole (105) zu agieren, und zu Folgendem:
Empfangen eines Signals von der Audiomischkonsole (105), die von der Steuerung unabhängig und getrennt ist;
Bestimmen eines Modells der Audiomischkonsole (105);
Ermitteln mindestens eines Attributs, das spezifisch für das Modell der Audiomischkonsole (105) ist;
Empfangen eines variablen Steuersignals, das einen Audiobefehl von der mobilen Benutzervorrichtung (115) angibt, die von der Steuerung unabhängig und getrennt ist; und
Übertragen einer Mischernachricht an die Audiomischkonsole (105) auf Grundlage des von der mobilen Benutzervorrichtung (115) empfangenen variablen Steuersignals und des mindestens einen für das Modell der Audiomischkonsole (105) spezifischen Attributs, um der Audiomischkonsole (105) eine modellspezifische Mischernachricht bereitzustellen.

2. Vorrichtung (120) nach Anspruch 1, wobei die Steuerung dazu konfiguriert ist, das variable Steuersignal dem für das Modell der Audiomischkonsole (105) spezifischen Attribut zuzuordnen und die modellspezifische Mischernachricht auf Grundlage einer Konvertierung des variablen Steuersignals in das Attribut zu formulieren.

3. Vorrichtung (120) nach Anspruch 1, wobei die Steuerung dazu konfiguriert ist, die Audiomischkonsole (105) als Reaktion auf den Empfang eines Antwortsignals von der Audiomischkonsole (105) zu detektieren, wobei das Antwortsignal eine Konsolenkennung beinhaltet.

4. Vorrichtung (120) nach Anspruch 3, wobei die Steuerung dazu konfiguriert ist, das Modell der Audiomischkonsole (105) auf Grundlage der Konsolenkennung zu ermitteln.

5. Vorrichtung (120) nach Anspruch 1, ferner umfassend einen drahtlosen Sendeempfänger, der dazu konfiguriert ist, über ein drahtloses Netzwerk mit der mobilen Benutzervorrichtung (115) und der Audiomischkonsole (105) zu kommunizieren.

6. Vorrichtung (120) nach Anspruch 1, wobei die modellspezifische Mischernachricht mindestens einen Audioverarbeitungsbefehl unter Verwendung von Musical Instrument Digital Interface (MIDI) (digitale Schnittstelle für Musikinstrumente) beinhaltet.

7. Verfahren, umfassend:
Empfangen eines Signals von einer Audiomischkonsole (105);
Bestimmen eines Modells der Audiomischkonsole (105);
Ermitteln von Attributen, die spezifisch für das Modell der Audiomischkonsole (105) sind;
Empfangen eines variablen Steuersignals, das einen Audiobefehl von einer mobilen Vorrichtung (115) angibt, die von der Audiomischkonsole (105) unabhängig und getrennt ist; und
Übertragen einer Mischernachricht an die Audiomischkonsole (105) auf Grundlage des variablen Steuersignals und des Modells der Audiomischkonsole (105).

8. Verfahren nach Anspruch 7, ferner umfassend ein Zuordnen des variablen Steuersignals zu den für das Modell der Audiomischkonsole (105) spezifischen Attributen und ein Formulieren der Mischernachricht auf Grundlage einer Konvertierung des variablen Steuersignals in die Attribute.

9. Verfahren nach Anspruch 7, wobei ein Detektieren der Audiomischkonsole (105) ein Empfangen eines Antwortsignals von der Audiomischkonsole (105) beinhaltet, wobei das Antwortsignal eine Konsolenkennung beinhaltet.

10. Verfahren nach Anspruch 9, ferner umfassend ein Ermitteln des Modells der Audiomischkonsole (105) auf Grundlage der Konsolenkennung.

11. Verfahren nach Anspruch 7, wobei die Mischernachricht mindestens einen Audioverarbeitungsbefehl unter Verwendung von Musical Instrument Digital Interface (MIDI) beinhaltet.

## Revendications

1. Appareil (120) destiné à agir comme intermédiaire entre un dispositif mobile d'utilisateur (115) et une console de mélange audio (105), comprenant :
un contrôleur configuré pour agir comme intermédiaire entre le dispositif mobile d'utilisateur (115) et la console de mélange audio (105) et pour :
recevoir un signal provenant de la console de mélange audio (105) distincte et séparée du contrôleur ;
déterminer un modèle de la console de mélange audio (105) ;
identifier au moins un attribut spécifique au modèle de la console de mélange audio (105) ;
recevoir un signal de contrôle variable indiquant une commande audio provenant du dispositif mobile d'utilisateur (115) distinct et séparé du contrôleur ; et
transmettre un message de mélangeur à la console de mélange audio (105) sur la base du signal de contrôle variable reçu depuis le dispositif mobile d'utilisateur (115) et l'au moins un attribut spécifique au modèle de la console de mélange audio (105) pour fournir à la console de mélange audio (105) un message de mélangeur spécifique au modèle.

2. Appareil (120) selon la revendication 1, dans lequel le contrôleur est configuré pour mapper le signal de contrôle variable avec l'attribut spécifique au modèle de la console de mélange audio (105) et formuler le message de mélangeur spécifique au modèle sur la base d'une translation du signal de contrôle variable à l'attribut.

3. Appareil (120) selon la revendication 1, dans lequel le contrôleur est configuré pour détecter la console de mélange audio (105) en réponse à la réception d'un signal de réponse provenant de la console de mélange audio (105), dans lequel le signal de réponse comprend une identification de console.

4. Appareil (120) selon la revendication 3, dans lequel le contrôleur est configuré pour identifier le modèle de la console de mélange audio (105) sur la base de l'identification de console.

5. Appareil (120) selon la revendication 1, comprenant en outre un émetteur-récepteur sans fil configuré pour communiquer avec le dispositif mobile d'utilisateur (115) et la console de mélange audio (105) via un réseau sans fil.

6. Appareil (120) selon la revendication 1, dans lequel le message de mélangeur spécifique au modèle comprend au moins une commande de traitement audio utilisant une interface numérique d'instrument de musique (MIDI).

7. Procédé comprenant :
la réception d'un signal provenant d'une console de mélange audio (105) ;
la détermination d'un modèle de la console de mélange audio (105) ;
l'identification d'attributs spécifiques au modèle de la console de mélange audio (105) ;
la réception d'un signal de contrôle variable indiquant une commande audio provenant d'un dispositif mobile d'utilisateur (115) séparé et distinct de la console de mélange audio (105) ; et
la transmission d'un message de mélangeur à la console de mélange audio (105) sur la base du signal de contrôle variable et du modèle de la console de mélange audio (105).

8. Procédé selon la revendication 7, comprenant en outre le mappage du signal de contrôle variable avec les attributs spécifiques au modèle de la console de mélange audio (105) et la formulation du message de mélangeur sur la base d'une translation du signal de contrôle variable aux attributs.

9. Procédé selon la revendication 7, dans lequel la détection de la console de mélange audio (105) comprend la réception d'un signal de réponse provenant de la console de mélange audio (105), dans lequel le signal de réponse comprend une identification de console.

10. Procédé selon la revendication 9, comprenant en outre l'identification du modèle de la console de mélange audio (105) sur la base de l'identification de console.

11. Procédé selon la revendication 7, dans lequel le message de mélangeur spécifique au modèle comprend au moins une commande de traitement audio utilisant une interface numérique d'instrument de musique (MIDI).
